# EUROPÄISCHE PATENTANMELDUNG

(11) **EP 4 712 052 A1**
(43) Veröffentlichungstag der Anmeldung: **18.03.2026**
(21) Anmeldenummer: 24200360.6
(22) Anmeldetag: 13.09.2024
(51) Int. Cl.: G07C 5/00, G07C 5/08

(54) **AUSWERTEN VON FEHLERCODES**

(71) Anmelder: Schmitz Cargobull AG, 48341 Altenberge (DE)
(72) Erfinder: Steinbach, Jan, 48163 Münster (DE); Ince, Cafer, Dr., 89075 Ulm (DE)
(74) Vertreter: Cohausz & Florack

(57) **Zusammenfassung**

Es wird unter anderem offenbart ein Verfahren ausgeführt durch einen oder mehrere Server (2), wobei das Verfahren umfasst:
- Erhalten (401) einer Vielzahl von Fehlercodes für eine Vielzahl von Nutzfahrzeuganhängern (101-103), wobei jeder der Fehlercodes ein unerwünschtes Verhalten eines jeweiligen Nutzfahrzeuganhängers der Vielzahl von Nutzfahrzeuganhängern (101-103) oder einer oder mehrerer Komponenten des jeweiligen Nutzfahrzeuganhängers der Vielzahl von Nutzfahrzeuganhängern (101-103) repräsentiert;
- Auswerten (402) der erhaltenen Fehlercodes;
- basierend auf dem Auswerten, Erzeugen (403) einer Benutzerinformation.

## Beschreibung

### Gebiet

Beispielhafte Ausführungsformen der Erfindung betreffen das Auswerten von Fehlercodes.

### Hintergrund

Im Stand der Technik sind Nutzfahrzeuganhänger umfassend eine Telematikeinheit bekannt, die in mit einer bestimmten Häufigkeit Telematikdatensätze mit Zustandsinformationen an einen Server senden. Wenn die Telematikeinheit einen Fehlerzustand des Nutzfahrzeuganhängers erkannt hat, können diese Zustandsinformationen beispielsweise einen Fehlercode, der dem erkannten Fehlerzustand zugeordnet ist, enthalten.

### Zusammenfassung einiger beispielhafter Ausführungsformen der Erfindung

Diese aus dem Stand der Technik bekannten Telematikdatensätze und die darin enthaltenen Fehlercodes erlauben aber immer nur Rückschlüsse auf den Zustand des jeweiligen Nutzfahrzeuganhängers, so dass im Falle eines Fehlerzustands auch nur Gegenmaßnahmen für den jeweiligen Nutzfahrzeuganhänger unternommen werden können. Eine Aufgabe der Erfindung ist es daher, diesen Nachteil zu überwinden.

Eine weitere Aufgabe der Erfindung ist es, den Stand der Technik in vorteilhafterweise weiterzubilden.

Gemäß der Erfindung wird ein Verfahren offenbart, wobei das Verfahren durch einen oder mehrere Server ausgeführt wird, und wobei das Verfahren umfasst:
- Erhalten einer Vielzahl von Fehlercodes für eine Vielzahl von Nutzfahrzeuganhängern, wobei jeder der Fehlercodes ein unerwünschtes Verhalten eines jeweiligen Nutzfahrzeuganhängers der Vielzahl von Nutzfahrzeuganhängern oder einer oder mehrerer Komponenten des jeweiligen Nutzfahrzeuganhängers der Vielzahl von Nutzfahrzeuganhängern repräsentiert;
- Auswerten der erhaltenen Fehlercodes;
- basierend auf dem Auswerten, Erzeugen einer Benutzerinformation.

Das offenbarte Verfahren wird durch einen oder mehrere Server ausgeführt. Dass das offenbarte Verfahren durch einen Server ausgeführt wird, soll derart verstanden werden, dass der Server das Verfahren allein ausführt; d.h. der Server oder Mittel des Servers führen alle Schritte des Verfahrens aus. Und dass das offenbarte Verfahren durch mehrere Server ausgeführt wird, soll derart verstanden werden, dass die Server das Verfahren gemeinsam ausführen; d.h. die Server oder Mittel der Server kooperieren, um das Verfahren auszuführen. Zum Beispiel kann ein Server einen oder mehrere Schritte des Verfahrens ausführen, und ein anderer Server kann einen oder mehrere andere Schritte des Verfahrens ausführen. Alternativ oder zusätzlich kann auch vorgesehen sein, dass zwei Server kooperieren, um einen oder mehrere Schritte des Verfahrens gemeinsam auszuführen. Die mehreren Server können Teil einer sogenannten Cloud sein.

Dementsprechend wird gemäß der Erfindung ferner ein Server offenbart, wobei der Server Mittel eingerichtet zur Ausführung des offenbarten Verfahrens umfasst. Dabei sind die Mittel des Servers eingerichtet, das Verfahren alleine und/oder in Kooperation mit einem oder mehreren weiteren Servern auszuführen. Zum Beispiel ist der Server Teil einer sogenannten Cloud.

Die Mittel können Hardware- und/oder Software-Komponenten umfassen. Die Mittel können beispielsweise mindestens einen Speicher mit Programmanweisungen eines Computerprogramms (z.B. des unten offenbarten Computerprogramms) und mindestens einen Prozessor ausgebildet zum Ausführen von Programmanweisungen aus dem mindestens einen Speicher umfassen. Dementsprechend soll auch ein Server als offenbart verstanden werden, der zumindest einen Prozessor und zumindest einen Speicher mit Programmanweisungen umfasst, wobei der zumindest eine Speicher und die Programmanweisungen eingerichtet sind, gemeinsam mit dem zumindest einen Prozessor, den Server zu veranlassen, das offenbarte Verfahren alleine oder in Kooperation mit einem oder mehreren weiteren Servern auszuführen. Es versteht sich, dass der offenbarte Server auch andere nicht aufgeführte Mittel umfassen kann.

Ferner wird ein System offenbart wobei das System zumindest den offenbarten Server und die Vielzahl von Nutzfahrzeuganhängern umfasst. Es versteht sich, dass das System auch mehrere der offenbarten Server umfassen kann, z.B. wenn diese Server das offenbarte Verfahren gemeinsam ausführen.

Ferner wird ein Computerprogramm offenbart, wobei das Computerprogramm Programmanweisungen umfasst, die dazu ausgebildet sind, bei Ausführung durch mindestens einen Prozessor einen Server (z.B. den oben offenbarten Server) zu veranlassen, das offenbarte Verfahren alleine oder in Kooperation mit einem oder mehreren weiteren Servern auszuführen

Das offenbarte Computerprogramm ist beispielsweise auf einem computerlesbaren Speichermedium enthalten und/oder gespeichert. Unter einem computerlesbaren Speichermedium soll beispielsweise ein physisches und/oder berührbares Speichermedium verstanden werden.

Das offenbarte Verfahren, der offenbarte Server, das offenbarte System und das offenbarte Computerprogramm dienen beispielsweise zum Auswerten von Fehlercodes.

Im Folgenden werden die Eigenschaften des offenbarten Verfahrens (im Folgenden auch als "Verfahren" bezeichnet), des offenbarten Servers (im Folgenden auch als "Server" bezeichnet), des offenbarten Systems (im Folgenden auch als "System" bezeichnet) sowie des offenbarten Computerprogramms (im Folgenden auch als "Computerprogramm" bezeichnet) - teilweise beispielhaft - beschrieben. Es versteht sich, dass das Verfahren, der Server, das System und das Computerprogramm zueinander korrespondieren, so dass die Offenbarung eines Merkmals für eine dieser Kategorien als Offenbarung eines korrespondierenden Merkmals für die anderen Kategorien verstanden werden soll.

Ein Nutzfahrzeuganhänger ist zum Beispiel ein Anhänger für einen Lastkraftwagen, wie ein Starrdeichselanhänger oder ein Gelenkdeichselanhänger oder ein Sattelauflieger. Solche Nutzfahrzeuganhänger sind insbesondere für den Transport von Gütern, vorzugsweise Stückgütern, im öffentlichen Straßenverkehr vorgesehen. Zu diesem Zweck weisen Nutzfahrzeuganhänger unterschiedliche Arten von Nutzfahrzeugaufbauten auf, welche der Aufnahme der zu transportierenden Güter in einem Laderaum dienen. So sind beispielsweise Kofferaufbauten mit festen Seitenwänden, einer festen Stirnwand, einer durch Flügeltüren gebildeten Rückwand und einem festen Dach bekannt, welche den Laderaum umschließen. Da die Kofferaufbauten geschlossen sind, sind Kofferaufbauten in besonderem Maße für den Transport von feuchtigkeitsempfindlichen und/oder temperaturempfindlichen Gütern, also beispielsweise für den sogenannten Trockentransport und/oder den Kühltransport geeignet. Neben Kofferaufbauten sind zudem sogenannte Planenaufbauten bekannt, bei denen die Seitenwände und das Dach durch wenigstens eine Plane verschlossen sind. Die Stirnwand ist bei Planenaufbauten meist als feste Wand ausgebildet, während die Rückwand regelmäßig durch zwei Flügeltüren gebildet wird, um den Laderaum bedarfsweise von hinten zu beladen. Wenn eine Plane entlang der Seitenwand verschoben werden kann, spricht man auch von sogenannten Curtainsidern. Dementsprechend soll unter einem Nutzfahrzeugaufbau beispielsweise ein Kofferaufbau, ein Planenaufbau und/oder ein Curtainsider verstanden werden.

Unter dem Erhalten einer Vielzahl von Fehlercodes für eine Vielzahl von Nutzfahrzeuganhängern soll beispielsweise verstanden werden, dass für jeden Nutzfahrzeuganhänger der Vielzahl von Nutzfahrzeuganhängern zumindest ein Fehlercode erhalten wird. Zum Beispiel umfasst die Vielzahl von Fehlercodes zumindest einen jeweiligen Fehlercode für jeden Nutzfahrzeuganhänger der Vielzahl von Nutzfahrzeuganhängern.

Zum Beispiel wird jeder der Fehlercodes von einem jeweiligen Nutzfahrzeuganhänger der Vielzahl von Nutzfahrzeuganhängern an zumindest einen der Server gesendet, so dass die Vielzahl von Fehlercodes erhalten werden, indem sie durch den zumindest einen der Server von der Vielzahl von Nutzfahrzeuganhängern empfangen werden.

Dabei repräsentiert jeder der Fehlercodes ein jeweiliges unerwünschtes Verhalten eines jeweiligen Nutzfahrzeuganhängers der Vielzahl von Nutzfahrzeuganhängern oder einer oder mehrerer Komponenten des jeweiligen Nutzfahrzeuganhängers der Vielzahl von Nutzfahrzeuganhängern. Zum Beispiel ist jeder der Fehlercodes einem jeweiligen unerwünschten Verhalten zugeordnet. Sobald ein unerwünschtes Verhalten zum ersten Mal erkannt wird, wird ihm beispielsweise ein Fehlercode zugeordnet. Dementsprechend soll ein unerwünschtes Verhalten, dem ein Fehlercode zugeordnet ist, beispielsweise als ein bekanntes unerwünschtes Verhalten verstanden werden, wohingegen ein unerwünschtes Verhalten, dem kein Fehlercode zugeordnet ist, beispielsweise als unbekanntes unerwünschtes Verhalten verstanden werden soll.

Ein jeweiliges unerwünschten Verhalten eines jeweiligen Nutzfahrzeuganhängers der Vielzahl von Nutzfahrzeuganhängern liegt beispielsweise vor, wenn sich der jeweilige Nutzfahrzeuganhänger in einem unerwünschten Betriebszustand befindet. Unter dem Betriebszustand des Nutzfahrzeuganhängers soll beispielsweise eine Beschreibung (z.B. eine Repräsentation) von (z.B. ausgewählten) Eigenschaften des Nutzfahrzeuganhängers, die sich typischerweise im Betrieb des Nutzfahrzeuganhängers verändern, verstanden werden. Eigenschaften des Nutzfahrzeuganhängers, die sich typischerweise im Betrieb des Nutzfahrzeuganhängers verändern, werden im Folgenden auch als veränderliche Eigenschaften bezeichnet. Solche veränderlichen Eigenschaften werden beispielsweise durch den Gebrauch des Nutzfahrzeuganhängers und/oder den Verbrauch von Betriebsmitteln während des Betriebs des Nutzfahrzeuganhängers bestimmt. Es handelt sich dabei beispielsweise um durch Fahrzeugsensoren im Betrieb des Nutzfahrzeuganhängers überwachte Eigenschaften (wie Tankfüllstand, Batteriespannung, Batterietemperatur, Reifendruck und/oder Achslast).

Zum Beispiel kann, wie unten im Detail offenbart, vorgesehen sein, dass jeder Nutzfahrzeuganhänger der Vielzahl von Nutzfahrzeuganhängern eine jeweilige Datenverarbeitungseinheit (z.B. eine Telematikeinheit) umfasst, wobei die jeweilige Telematikeinheit eingerichtet ist zum Erkennen, basierend auf einem jeweiligen ersten Sensordatensatz, eines unerwünschten Verhaltens (z.B. eines unerwünschten Betriebszustands) des jeweiligen Nutzfahrzeuganhängers und/oder einer oder mehrerer Komponenten des jeweiligen Nutzfahrzeuganhängers, wobei der jeweilige erste Sensordatensatz Sensordaten umfasst, die durch Fahrzeugsensoren des jeweiligen Nutzfahrzeuganhängers erfasst wurden. Wenn die jeweilige Datenverarbeitungseinheit des jeweiligen Nutzfahrzeuganhängers ein unerwünschten Verhalten (z.B. einen unerwünschten Betriebszustand) des jeweiligen Nutzfahrzeuganhängers und/oder einer oder mehrerer Komponenten des jeweiligen Nutzfahrzeuganhängers erkennt, kann die die jeweilige Datenverarbeitungseinheit des jeweiligen Nutzfahrzeuganhängers einen entsprechenden Fehlercode (z.B. einem dem erkannten unerwünschten Verhalten (z.B. dem erkannten unerwünschten Betriebszustand) zugeordneten Fehlercode) an zumindest einen der Server senden.

Unter dem Auswerten der erhaltenen Fehlercodes soll beispielsweise verstanden werden, dass für die Vielzahl von Fehlcodes vorgegebene Kenngrößen bestimmt werden. Bei den vorgegebenen Kenngrößen kann es sich zumindest teilweise um statistische Kenngrößen (z.B. Gesamtpopulation und/oder Anzahl und/oder Wachstums- oder Schrumpfrate (z.B. pro Tag oder pro Woche oder pro Monat oder pro Jahr) und/oder durch (z.B. lineare oder Polynom Trend) Interpolation und/oder Trendanalysen erhaltene Prognosewerte) handeln. Durch das Bestimmen solcher statistischer Kenngrößen können im Rahmen des Auswertens beispielsweise statistische Auffälligkeiten wie auffällige Trends und/oder auffällige Abweichungen erkannt werden. Das Auswerten kann beispielsweise anhand vorgegebener Regeln (z.B. einem Algorithmus) erfolgen. Die Regeln können beispielsweise vorgeben, welche Kenngrößen bestimmt und unter welchen Umständen eine statistische Auffälligkeit wie ein auffälliger Trend und/oder eine auffällige Abweichung erkannt werden sollen, z.B. können die Regeln derart vorgegeben sein, dass eine statistische Auffälligkeit für die Vielzahl von Nutzfahrzeuganhängern und/oder eine oder mehrere Gruppen von Nutzfahrzeuganhängern dann erkannt wird, wenn sie ein Hinweis auf eine erhöhte Wahrscheinlichkeit für ein unerwünschtes Verfahren für die Vielzahl von Nutzfahrzeuganhängern und/oder eine oder mehrere Gruppen von Nutzfahrzeuganhängern sein könnte.

Als Ergebnis des Auswertens werden beispielsweise die Kenngrößen und/oder die Angabe, ob eine statistische Auffälligkeit erkannt wurde, erhalten.

Gerade bei einer großen Vielzahl von Nutzfahrzeuganhängern können durch eine solche statistische Auswertung und/oder das Bestimmen von statistischen Kenngrößen frühzeitig statistische Auffälligkeiten wie auffällige Trends oder auffällige Abweichungen erkannt werden, die ein Hinweis auf eine erhöhte Wahrscheinlichkeit für ein unerwünschtes Verhalten (wie den drohenden Ausfall von Komponenten) für die Vielzahl von Nutzfahrzeuganhängern und/oder eine oder mehrere Gruppen von Nutzfahrzeuganhängern sein können. Zum Beispiel kann ein Fehlercode für eine Gruppe von Nutzfahrzeugen, die alle im gleichen Produktionszeitraum produziert worden, (z.B. um 10%) häufiger vorkommen als nach dem Durchschnitt für alle anderen Nutzfahrzeuge der Vielzahl von Nutzfahrzeugen zu erwarten wäre. Diese Häufung deutet daraufhin, dass für die Nutzfahrzeuge dieser Gruppe von Nutzfahrzeugen eine erhöhte Wahrscheinlichkeit für das Auftreten des unerwünschten Verhaltens, das diesem Fehlercode zugeordnet ist, besteht - was beispielsweise auf den Einbau fehlerhafter Komponenten während dieses Produktionszeitraums hindeuten könnte.

Dabei kann eine Gruppe von Nutzfahrzeuganhängern der Vielzahl von Nutzfahrzeuganhängern beispielsweise alle Nutzfahrzeuganhänger der Vielzahl von Nutzfahrzeuganhängern umfassen, die sich im gleichen Grundzustand befinden und/oder die gleiche Konfiguration aufweisen und/oder dem gleichen Eigentümer gehören und/oder im gleichen Zeitraum (z.B. Produktionstag, Produktionsmonat oder Produktionsjahr) produziert wurden. Dementsprechend kann die Vielzahl von Nutzfahrzeuganhängern mehrere Gruppen von Nutzfahrzeuganhängern umfassen. Zum Beispiel kann jeder Nutzfahrzeuganhänger der Vielzahl von Nutzfahrzeuganhängern einer oder mehreren Gruppen von Nutzfahrzeugen zugeordnet sein. Die Zuordnung der Vielzahl von Nutzfahrzeuganhängern zu den Gruppen von Nutzfahrzeuganhängern kann beispielsweise in einer Datenbank (z.B. einer Datenbank eines ERP-Systems (Enterprise Ressource Planning Systems)) hinterlegt sein. Es versteht sich, dass die Erfindung nicht auf die oben genannten Gruppen von Nutzfahrzeuganhängern beschränkt ist.

Basierend auf dem Auswerten, wird eine Benutzerinformation erzeugt. Die Benutzerinformation dient beispielsweise dazu, zumindest einen Benutzer über das Ergebnis des Auswertens zu informieren. Dadurch erhält der Benutzer beispielsweise Gelegenheit mögliche Gegenmaßnahmen, wie den Austausch von Komponenten, die drohen auszufallen, zu treffen.

Unter dem Erzeugen einer Information wie der Benutzerinformation basierend auf dem Auswerten soll beispielsweise verstanden werden, dass die Information unter Berücksichtigung zumindest eines Ergebnisses des Auswertens erzeugt wird und/oder dass die Information nur in Reaktion auf zumindest ein vorgegebenes Ergebnis des Auswertens erzeugt wird.

Zum Beispiel kann vorgesehen sein, dass die Benutzerinformation nur dann erzeugt wird, wenn im Rahmen des Auswertens eine statistische Auffälligkeit wie auffällige Trends und/oder auffällige Abweichungen erkannt wurden. Zum Beispiel kann die Benutzerinformation in diesem Fall angeben, für welche(n) Fehlercode(s) und/oder für welche Gruppe von Nutzfahrzeuganhängern der Vielzahl von Nutzfahrzeuganhängern eine statistische Auffälligkeit erkannt wurde.

Alternativ oder zusätzlich kann die Benutzerinformation eine oder mehrere der oben offenbarten Kenngrößen repräsentieren (z.B. quantitativ und/oder qualitativ angeben).

Der Benutzer kann beispielsweise ein mit der Vielzahl von Nutzfahrzeuganhängern assoziierter Benutzer und/oder einer Gruppe von Nutzfahrzeuganhängern der Vielzahl von Nutzfahrzeuganhängern assoziierter Benutzer sein, wie der Eigentümer und/oder Betreuer (z.B. ein Fuhrparkbetreuer) eines oder mehrerer der Vielzahl von Nutzfahrzeuganhängern. Zum Beispiel kann der Benutzer mit zumindest einem Nutzfahrzeuganhänger einer Gruppe von Nutzfahrzeuganhängern der Vielzahl von Nutzfahrzeuganhängern assoziiert sein, wobei für die Gruppe von Nutzfahrzeuganhängern beispielsweise eine statistische Auffälligkeit erkannt wurde.

Ein solcher mit zumindest einem Nutzfahrzeuganhänger assoziierter Benutzer kann beispielsweise in einer Datenbank (z.B. einer Datenbank eines ERP-Systems (Enterprise Ressource Planning Systems)) hinterlegt sein, so dass das Erzeugen der Benutzerinformation das Abfragen eines mit dem zumindest einen Nutzfahrzeuganhänger assoziierten Benutzers in der Datenbank umfassen kann. Als Ergebnis der Abfrage kann beispielsweise eine Kontaktinformation zum Senden der Benutzerinformation an eine Benutzervorrichtung des Benutzers und/oder zum Bereitstellen der Benutzerinformation zum Abrufen durch eine Benutzervorrichtung des Benutzers erhalten werden.

Die Erfindung stellt somit eine Lösung bereit, die es ermöglicht frühzeitig einen Hinweis auf eine erhöhte Wahrscheinlichkeit für ein unerwünschtes Verhalten für die Vielzahl von Nutzfahrzeuganhängern und/oder für eine oder mehrere Gruppen von Nutzfahrzeuganhängern zu erhalten und mögliche Gegenmaßnahmen zu treffen.

Weitere Vorteile der offenbarten Erfindung werden nachfolgend anhand beispielhafter Ausführungsformen des offenbarten Verfahrens, des offenbaten Servers, des offenbarten Systems und des offenbarten Computerprogramms beschrieben.

In beispielhaften Ausführungsformen umfasst jeder Nutzfahrzeuganhänger der Vielzahl von Nutzfahrzeuganhängern eine jeweilige Datenverarbeitungseinheit (z.B. eine Telematikeinheit), wobei die jeweilige Datenverarbeitungseinheit eingerichtet ist zum Erkennen, basierend auf einem jeweiligen ersten Sensordatensatz, eines unerwünschten Verhaltens (z.B. eines unerwünschten Betriebszustands) des jeweiligen Nutzfahrzeuganhängers und/oder einer oder mehrerer Komponenten des jeweiligen Nutzfahrzeuganhängers, wobei der jeweilige erste Sensordatensatz Sensordaten umfasst, die durch Fahrzeugsensoren des jeweiligen Nutzfahrzeuganhängers erfasst wurden.

Zum Beispiel führt die jeweilige Datenverarbeitungseinheit ein Computerprogramm mit Anweisungen aus, die die jeweilige Datenverarbeitungseinheit veranlassen, ein unerwünschtes Verhalten (z.B. einen unerwünschten Betriebszustand) basierend auf dem jeweiligen ersten Sensordatensatz zu erkennen. Dass die jeweilige Datenverarbeitungseinheit das Computerprogramm ausführt, soll beispielsweise derart verstanden werden, dass sich das Computerprogramm in einem Speicher der jeweiligen Datenverarbeitungseinheit befindet und zumindest ein Prozessor der jeweiligen Datenverarbeitungseinheit Anweisungen des Computerprogramms ausführt, die die jeweilige Datenverarbeitungseinheit veranlassen, das unerwünschte Verhalten basierend auf dem jeweiligen ersten Sensordatensatz zu erkennen.

Die Sensordaten eines Sensordatensatzes (wie die Sensordaten des jeweiligen ersten Sensordatensatzes und/oder die Sensordaten des unten offenbarten zweiten Sensordatensatzes) werden/wurden durch verschiedene Fahrzeugsensoren des jeweiligen Nutzfahrzeuganhängers erfasst. Dass Sensordaten eines solchen Sensordatensatzes durch Fahrzeugsensoren erfasst werden/wurden, soll beispielsweise derart verstanden werden, dass jeder der Fahrzeugsensoren jeweilige Sensordaten bereitstellt/bereitgestellt hat und die jeweiligen Sensordaten eine durch den jeweiligen Fahrzeugsensor erfasste Eigenschaft (quantitativ und/oder qualitativ) repräsentieren. Mit anderen Worten können die Sensordaten eines Sensordatensatzes durch verschiedene Fahrzeugsensoren des jeweiligen Nutzfahrzeuganhängers erfasste Eigenschaften (quantitativ und/oder qualitativ) repräsentieren. Bei jeder der durch einen der Fahrzeugsensoren erfassten Eigenschaften kann es sich beispielsweise jeweils um eine physikalische oder chemische Größe handeln.

Die verschiedenen Fahrzeugsensoren des jeweiligen Nutzfahrzeuganhängers sind beispielsweise eingerichtet, die Eigenschaften mit einer bestimmten Häufigkeit (z.B. mit einer bestimmten Frequenz und/oder in bestimmten Zeitabständen) zu erfassen, wobei für verschiedene Fahrzeugsensoren verschiedene Häufigkeiten verwendet werden können. Die erfassten Sensordaten können beispielsweise gesammelt und mit einer bestimmten Häufigkeit (z.B. mit einer bestimmten Frequenz und/oder in bestimmten Zeitabständen) zu einem Sensordatensatz zusammengefasst werden, so dass die Sensordaten eines Sensordatensatzes beispielsweise nur (z.B. alle) Sensordaten umfassen, die erfasst wurden, nachdem der vorherige Sensordatensatz zusammengestellt wurde. Zum Beispiel erhält die jeweilige Datenverarbeitungseinheit des jeweiligen Nutzfahrzeuganhängers die erfassten Sensordaten von den verschiedenen Fahrzeugsensoren, z.B. um sie zu sammeln und zu einem Sensordatensatz zusammenzufassen und/oder um sie weiterzuverarbeiten (z.B. um das unerwünschte Verhalten zu erkennen).

Unter den Fahrzeugsensoren des jeweiligen Nutzfahrzeuganhängers, die die Sensordaten des jeweiligen ersten Sensordatensatzes und/oder die Sensordaten des unten offenbarten zweiten Sensordatensatzes erfassen, sollen beispielsweise reguläre Fahrzeugsensoren des Nutzfahrzeuganhängers verstanden werden. Dabei sollen unter regulären Fahrzeugsensoren des jeweiligen Nutzfahrzeuganhängers beispielsweise Fahrzeugsensoren verstanden werden, die serienmäßig in den jeweiligen Nutzfahrzeuganhänger eingebaut wurden und/oder die auch in vergleichbaren Nutfzahrzeuganhängern (z.B. in Nutzfahrzeuganhängern mit dem gleichen Grundzustand und/oder mit der gleichen Konfiguration), insbesondere in vergleichbaren verkauften Nutfzahrzeuganhängern, eingebaut wurden/werden. Dementsprechend kann jeder der Vielzahl von Nutzfahrzeuganhänger oder jeder einer Gruppe von Nutzfahrzeuganhängern der Vielzahl von Nutzfahrzeuganhängern jeweilige Fahrzeugsensoren umfassen.

Zum Beispiel können die Sensordaten des jeweiligen ersten Sensordatensatzes den Betriebszustands des jeweiligen Nutzfahrzeuganhängers zu dem Zeitpunkt, zu dem der jeweilige erste Sensordatensatz erfasst wurde, repräsentieren. Wenn die Sensordaten des ersten Sensordatensatzes zu unterschiedlichen Zeitpunkten erfasst wurden, soll als Zeitpunkt zu dem der jeweilige erste Sensordatensatz erfasst wurde, beispielsweise der Zeitpunkt bestimmt werden, zu dem die letzten Sensordaten des jeweiligen ersten Sensordatensatzes erfasst wurden.

Das Erkennen, basierend auf dem jeweiligen ersten Sensordatensatz, eines unerwünschten Verhaltens (z.B. eines unerwünschten Betriebszustands) des jeweiligen Nutzfahrzeuganhängers oder einer oder mehrerer Komponenten des jeweiligen Nutzfahrzeuganhängers kann beispielsweise anhand von vorgegebenen Regeln erfolgen. Zum Beispiel kann das Erkennen eines unerwünschten Verhaltens (z.B. eines unerwünschten Betriebszustands) des jeweiligen Nutzfahrzeuganhängers oder einer oder mehrerer Komponenten des jeweiligen Nutzfahrzeuganhängers das Bestimmen der Ähnlichkeit und/oder das Vergleichen des jeweiligen ersten Sensordatensatzes mit einem oder mehreren vorgegebenen Sensordatensätze umfassen. Zum Beispiel ist jeder der vorgegebenen Sensordatensätze mit einem bestimmten unerwünschten Betriebszustand, d.h. mit einem bestimmten unerwünschten Verhalten, assoziiert. Zum Beispiel können solche Sensordatensätze für bekannte unerwünschte Betriebszustände und/oder bekannten unerwünschte Verhalten vorgegeben werden, z.B. weil sie in der Vergangenheit zusammen mit dem unerwünschten Betriebszustand und/oder dem unerwünschten Verhalten aufgetreten sind. Dementsprechend können die Regeln beispielsweise vorgeben, dass, wenn das Bestimmen der Ähnlichkeit und/oder das Vergleichen ergibt, dass der jeweilige erste Sensordatensatz ähnlich (z.B. weil ein als Ergebnis des Bestimmens der Ähnlichkeit und/oder des Vergleichens erhaltenes Ähnlichkeitsmaß einen Schwellwert überschreitet) und/oder identisch zu einem bestimmten Sensordatensatz der vorgegebenen Sensordatensätze ist, erkannt werden soll, dass sich der jeweilige Nutzfahrzeuganhänger oder eine oder mehrere Komponenten des jeweiligen Nutzfahrzeuganhängers in dem mit dem bestimmten Sensordatensatz assoziierten unerwünschten Betriebszustand befindet. Wenn erkannt wird, dass sich der jeweilige Nutzfahrzeuganhänger oder eine oder mehrere Komponenten des jeweiligen Nutzfahrzeuganhängers in dem mit dem bestimmten Sensordatensatz assoziierten unerwünschten Betriebszustand befindet, kann die jeweilige Telematikeinheit des jeweiligen Nutzfahrzeuganhängers beispielsweise einen Telematikdatensatz umfassend einen jeweiligen Fehlercode, der den erkannten unerwünschten Betriebszustand (d.h. das erkannte unerwünschte Verhalten) des jeweiligen Nutzfahrzeuganhängers oder einer oder mehrerer Komponenten des jeweiligen Nutzfahrzeuganhängers repräsentiert, an zumindest einen der Server senden.

In beispielhaften Ausführungsformen sind die erhaltenen Fehlercodes zumindest teilweise in Telematikdatensätzen enthalten sind, wobei die Telematikdatensätze von der Vielzahl von Nutzfahrzeuganhängern empfangen werden.

Zum Beispiel repräsentiert jeder in den Telematikdatensätzen enthaltene Fehlercode einen durch die jeweilige Datenverarbeitungseinheit (z.B. eine Telematikeinheit) des jeweiligen Nutzfahrzeuganhängers der Vielzahl von Nutzfahrzeuganhängern erkanntes unerwünschte Verhalten das jeweiligen Nutzfahrzeuganhängers oder einer oder mehrerer Komponenten des jeweiligen Nutzfahrzeuganhängers, wobei die jeweilige Datenverarbeitungseinheit des jeweiligen Nutzfahrzeuganhängers das unerwünschte Verhalten basierend auf einem jeweiligen ersten Sensordatensatz des jeweiligen Nutzfahrzeuganhängers erkannt hat, wobei der jeweilige erste Sensordatensatz Sensordaten umfasst, die durch Fahrzeugsensoren des jeweiligen Nutzfahrzeuganhängers erfasst wurden.

In beispielhaften Ausführungsformen umfasst das Verfahren ferner:
- Bereithalten, für jeden Nutzfahrzeuganhänger der Vielzahl von Nutzfahrzeuganhängern, einer jeweiligen digitalen Repräsentation des jeweiligen Nutzfahrzeuganhängers;
- Empfangen eines zweiten Sensordatensatzes zumindest für einen Nutzfahrzeuganhänger der Vielzahl von Nutzfahrzeuganhängern, wobei der zweite Sensordatensatz Sensordaten umfasst, die durch Sensoren des Nutzfahrzeuganhängers erfasst wurden, und wobei der zweite Sensordatensatz einen zweiten Zustand des Nutzfahrzeuganhängers repräsentiert;
- Aktualisieren der digitalen Repräsentation des Nutzfahrzeuganhängers (d.h. der Nutzfahrzeuganhänger, für den der zweite Sensordatensatz empfangen wurde) basierend auf dem zweiten Sensordatensatz, um eine aktualisierte digitale Repräsentation des Nutzfahrzeuganhängers in dem zweiten Zustand zu erhalten;
- Erkennen, basierend auf der aktualisierten digitalen Repräsentation des Nutzfahrzeuganhängers (d.h. der Nutzfahrzeuganhänger, für den der zweite Sensordatensatz empfangen wurde), eines unbekannten unerwünschten Verhaltens des Nutzfahrzeuganhängers und/oder einer oder mehrerer Komponenten des Nutzfahrzeuganhängers;
- in Reaktion auf das Erkennen des unerwünschten Verhaltens, Zuordnen eines Fehlercodes zu dem erkannten unbekannten unerwünschten Verhalten.

Unter dem Bereithalten einer digitalen Repräsentation eines Nutzfahrzeuganhängers soll beispielsweise verstanden werden, dass eine solche digitale Repräsentation in einem Speicher eines der Server gespeichert ist. Beispielsweise kann die digitale Repräsentation in dem Speicher dauerhaft gespeichert sein, z.B. wenn der Speicher ein nicht-flüchtiger Speicher ist. Alternativ ist auch denkbar, dass die digitale Repräsentation in dem Speicher nur zwischengespeichert wird, z.B. wenn der Speicher ein flüchtiger Speicher ist. Insbesondere kann die digitale Repräsentation in einer Datenbank in dem Speicher abgelegt sein, wobei in der Datenbank eine Vielzahl von digitalen Repräsentationen (z.B. eine für jeden der Vielzahl von Nutzfahrzeuganhängern) abgelegt sind.

Die digitale Repräsentation des Nutzfahrzeuganhängers ist beispielsweise ein digitales Modell (zum Beispiel ein sogenannter digitaler Zwilling) des Nutzfahrzeuganhängers.

Die digitale Repräsentation kann zum Beispiel den Zustand (z.B. den Grundzustand und/oder den Betriebszustand) des Nutzfahrzeuganhängers repräsentieren. Beispielsweise kann für jeden Nutzfahrzeuganhänger der Vielzahl von Nutzfahrzeuganhängern eine solche digitale Repräsentation des jeweiligen Nutzfahrzeuganhängers bereitgehalten werden.

Der Zustand des Nutzfahrzeuganhängers kann den Zustand des Nutzfahrzeuganhängers beispielsweise zu einem bestimmten Zeitpunkt beschreiben. Zum Beispiel kann der Zustand des Nutzfahrzeuganhängers den Grundzustand des Nutzfahrzeuganhängers (z.B. zu dem bestimmten Zeitpunkt) und/oder den Betriebszustand des Nutzfahrzeuganhängers (z.B. zu dem bestimmten Zeitpunkt) beschreiben.

Unter dem Grundzustand des Nutzfahrzeuganhängers soll beispielsweise eine Beschreibung (z.B. eine Repräsentation) von (z.B. ausgewählten) Eigenschaften des Nutzfahrzeuganhängers, die sich typischerweise im Betrieb des Nutzfahrzeuganhängers nicht verändern, verstanden werden. Eigenschaften des Nutzfahrzeuganhängers, die sich typischerweise im Betrieb des Nutzfahrzeuganhängers nicht verändern, werden im Folgenden auch als unveränderliche Eigenschaften bezeichnet. Solche unveränderlichen Eigenschaften werden beispielsweise durch den Nutzfahrzeuganhänger selbst und/oder die in den Nutzfahrzeuganhängers verbauten Komponenten bestimmt. Zum Beispiel kann der Grundzustand im Wesentlichen die unveränderlichen Eigenschaften des Nutzfahrzeuganhängers, die sich aus der Konfiguration und/oder Produktion des Nutzfahrzeuganhängers ergeben, beschreiben. Es handelt sich dabei beispielsweise um technische Daten des Nutzfahrzeuganhängers (wie Tankinhalt, Batteriekapazität, Reifengröße und/oder Fahrzeuggewicht) und/oder Betriebspunkte des Nutzfahrzeuganhängers (wie Soll-Batteriespannung, maximale Batterietemperatur, Soll-Reifendruck und/oder maximale Achslast).

Unter dem Betriebszustand des Fahrzeugs soll, wie oben im Detail offenbart, beispielsweise eine Beschreibung (z.B. eine Repräsentation) von (z.B. ausgewählten) Eigenschaften des Fahrzeugs, die sich typischerweise im Betrieb des Fahrzeugs verändern, verstanden werden.

Zum Beispiel können die Sensordaten des zweiten Sensordatensatzes den Betriebszustands des Nutzfahrzeuganhängers zu dem Zeitpunkt, zu dem der zweite Sensordatensatz erfasst wurde, repräsentieren. Wenn die Sensordaten des zweiten Sensordatensatzes zu unterschiedlichen Zeitpunkten erfasst wurden, soll als Zeitpunkt zu dem der zweite Sensordatensatz erfasst wurde, beispielsweise der Zeitpunkt bestimmt werden, zu dem die letzten Sensordaten des zweiten Sensordatensatzes erfasst wurden und/oder zu dem der erste Sensordatensatz empfangen wird.

Unter dem Aktualisieren der digitalen Repräsentation des Nutzfahrzeuganhängers basierend auf dem zweiten Sensordatensatz soll beispielsweise verstanden werden, dass der durch die digitale Repräsentation des Nutzfahrzeuganhängers repräsentierte Betriebszustand des Nutzfahrzeuganhängers entsprechend den Sensordaten des zweiten Sensordatensatzes angepasst wird. Als Ergebnis des Aktualisierens wird dann beispielsweise eine aktualisierte digitale Repräsentation des Nutzfahrzeuganhängers erhalten, die den gleichen Betriebszustand des Nutzfahrzeuganhängers wie die Sensordaten des zweiten Sensordatensatzes repräsentiert. Zum Beispiel kann die aktualisierte digitale Repräsentation den zweiten Sensordatensatz enthalten.

Dass das Erkennen eines unbekannten unerwünschten Verhaltens des Nutzfahrzeuganhängers und/oder einer oder mehrerer Komponenten des Nutzfahrzeuganhängers auf der aktualisierten digitalen Repräsentation des Nutzfahrzeuganhängers basiert soll beispielsweise derart verstanden werden, dass die aktualisierte digitale Repräsentation des Nutzfahrzeuganhängers bei dem Erkennen berücksichtigt werden soll. Es versteht sich jedoch, dass daneben auch noch andere Informationen bei dem Erkennen berücksichtigt werden können.

Das Erkennen, basierend auf der aktualisierten digitalen Repräsentation des Nutzfahrzeuganhängers, eines unbekannten unerwünschten Verhaltens des Fahrzeugs und/oder einer oder mehrerer Komponenten des Nutzfahrzeuganhängers kann beispielsweise anhand von vorgegebenen Regeln erfolgen. Zum Beispiel kann das Erkennen eines unbekannten unerwünschten Verhaltens des Nutzfahrzeuganhängers und/oder einer oder mehrerer Komponenten des Nutzfahrzeuganhängers das Bestimmen der Ähnlichkeit und/oder das Vergleichen des durch die aktualisierte digitale Repräsentation des Nutzfahrzeuganhängers repräsentierten Betriebszustand mit einem oder mehreren bekannten und/oder erwünschten Betriebszuständen umfassen. Der/die bekannten und/oder erwünschten Betriebszustände können beispielsweise vordefiniert sein. Zum Beispiel werden der/die bekannten und/oder erwünschten Betriebszustände zumindest teilweise durch Betriebspunkte des Nutzfahrzeuganhängers (wie Soll-Batteriespannung, maximale Batterietemperatur, Soll-Reifendruck und/oder maximale Achslast) definiert, die durch die digitale Repräsentation des Nutzfahrzeuganhängers beschrieben werden. Die Regeln können beispielsweise vorgeben, dass, wenn das Bestimmen der Ähnlichkeit und/oder das Vergleichen ergibt, dass der aktualisierte Betriebszustand keinem der bekannten und/oder erwünschten Betriebszustände entspricht, ein unbekanntes unerwünschtes Verhalten erkannt wird. Alternativ können die Regeln beispielsweise auch vorgeben, dass ein unbekanntes unerwünschtes Verhalten erkannt wird, wenn das Bestimmen der Ähnlichkeit und/oder das Vergleichen ergibt, dass der aktualisierte Betriebszustand zu keinem der bekannten und/oder erwünschten Betriebszustände ähnlich ist (z.B. weil (das/alle) als Ergebnis des Bestimmens der Ähnlichkeit und/oder des Vergleichens erhaltene(n) Ähnlichkeitsmaß(e) einen Schwellwert überschreitet/n). Die Erfindung ist allerdings nicht hierauf beschränkt. Beispielsweise kann das Erkennen auch anhand eines Erkennungsmodells(z.B. in Form eines künstlichen neuronalen Netzwerks) erfolgen.

In Reaktion auf das Erkennen des unbekannten unerwünschten Verhaltens, wird dem erkannten unbekannten unerwünschten Verhalten ein Fehlercode zugeordnet. Dies ermöglicht es beispielsweise das unbekannte unerwünschte Verhalten, wenn es noch einmal erkannt wird, zu identifizieren.

Wie oben offenbart, kann jeder Nutzfahrzeuganhänger der Vielzahl von Nutzfahrzeuganhängern eine jeweilige Datenverarbeitungseinheit (z.B. eine Telematikeinheit) umfassen. Wenn einem unbekannten unerwünschten Verhalten ein Fehlercode zugeordnet wird, können die Datenverarbeitungseinheiten der Vielzahl von Nutzfahrzeuganhängern beispielsweise derart angepasst werden, dass sie in Zukunft auch dieses unerwünschte Verhalten basierend auf einem jeweiligen ersten Sensordatensatz erkennen können. Zu diesem Zweck kann, in Reaktion auf das Erkennen des unbekannten unerwünschten Verhaltens, neuer Programmcode erzeugt werden, der Anweisungen enthält, die die jeweilige Datenverarbeitungseinheit veranlassen, das unbekannte unerwünschte Verhalten basierend auf einem jeweiligen durch Fahrzeugsensoren des jeweiligen Nutzfahrzeuganhängers erfassten ersten Sensordatensatz zu erkennen. Zum Beispiel ist der Programmcode eingerichtet, die jeweilige Datenverarbeitungseinheit zu veranlassen, das unbekannten unerwünschte Verhalten zumindest dann zu erkennen, wenn die jeweilige Datenverarbeitungseinheit den Programmcode ausführt und einen jeweiligen ersten Sensordatensatz erhält, der dem zweiten Sensordatensatz entspricht.

Zum Beispiel kann der Programmcode Anweisungen eines durch die jeweilige Datenverarbeitungseinheit ausführbaren Computerprogramms und/oder eines Teils eines durch die jeweilige Datenverarbeitungseinheit des Fahrzeugs ausführbaren Computerprogramms umfassen. Der Programmcode kann den Datenverarbeitungseinheiten zumindest eines Teils (z.B. einer Gruppe von Nutzfahrzeuganhängern) der Vielzahl von Nutzfahrzeuganhängern im Rahmen eines Updates (z.B. eines Softwareupdates) zur Verfügung gestellt (z.B. gesendet und/oder bereitgestellt) werden.

In beispielhaften Ausführungsformen umfasst der erste Sensordatensatz und/oder der zweite Sensordatensatz zumindest Sensordaten eines oder mehrerer Fahrzeugsensoren der folgenden Fahrzeugsensortypen umfasst:
- Temperatursensor;
- Batteriesensor;
- Spannungssensor;
- Stromsensor;
- Türsensor;
- Tankfüllstandssensor;
- Reifendrucksensor;
- Gewichtssensor.

In beispielhaften Ausführungsformen können die Fahrzeugsensoren zumindest teilweise Teil eines elektronischen Bremssystems und/oder einer Transportkältemaschine des Nutzfahrzeuganhängers sein.

In beispielhaften Ausführungsformen umfasst das Auswerten (i) ein statistisches Auswerten der erhaltenen Fehlercodes und/oder (ii) das Bestimmen von statistischen Kenngrößen für die Vielzahl von Fehlercodes.

Wie oben offenbart, soll unter dem Auswerten der erhaltenen Fehlercodes beispielsweise verstanden werden, dass für die Vielzahl von Fehlcodes vorgegebene Kenngrößen (z.B. Gesamtpopulation und/oder Anzahl und/oder Wachstums-oder Schrumpfrate (z.B. pro Tag oder pro Woche oder pro Monat oder pro Jahr) und/oder durch (z.B. lineare und/oder Polynom Trend) Interpolation und/oder Trendanalysen erhaltene Prognosewerte) bestimmt werden. Durch das Bestimmen solcher statistischer Kenngrößen können im Rahmen des Auswertens beispielsweise statistische Auffälligkeiten wie auffällige Trends und/oder auffällige Abweichungen erkannt werden. Das Auswerten kann beispielsweise anhand vorgegebener Regeln (z.B. einem Algorithmus) erfolgen. Die Regeln können beispielsweise vorgeben, welche Kenngrößen bestimmt und unter welchen Umständen eine statistische Auffälligkeit wie ein auffälliger Trend und/oder eine auffällige Abweichung erkannt werden sollen.

Zum Beispiel wird das Bestimmen von statistischen Kenngrößen in bestimmten Zeitabständen (z.B. einem Tag und/oder einer Woche und/oder einem Monat und/oder einem Jahr) wiederholt wird, wobei mit jeder Wiederholung jeweils nur die Kenngrößen für die Fehlercodes bestimmt werden, die seit der letzten Wiederholung erhalten wurden.

Zum Beispiel umfasst die Vielzahl von Fehlercodes nur die Fehlercodes, die in einem durch einen solchen Zeitabstand definierten Zeitraum erhalten wurden. Dieses wiederholte Bestimmen von Kenngrößen ermöglicht es beispielsweise im Rahmen des Auswertens auffällige Abweichungen (z.B. Abweichungen, die einen vorgegebenen Schwellwert wie z.B. 10% unter- oder überschreiten) zwischen Kenngrößen, die in unterschiedlichen Wiederholungen bestimmt wurden, und/oder Trends (z.B. stetige Veränderungen wie Ansteigen und/oder Absinken (z.B. Wachstumsraten), die einen Schwellwert wie z.B. 5% Anstieg und/oder Absinken pro Tag oder pro Woche oder pro Monat oder pro Jahr überschreiten) einer Kenngröße über mehrere Wiederholungen) zwischen Kenngrößen, die in unterschiedlichen Wiederholungen bestimmt wurden, zu erkennen.

Zum Beispiel werden die statistischen Kenngrößen jeweils für unterschiedliche Gruppen von Nutzfahrzeuganhängern der Vielzahl von Nutzfahrzeuganhängern bestimmt, wobei für jede der Gruppen von Nutzfahrzeuganhängern der Vielzahl von Nutzfahrzeuganhängern jeweils nur die Kenngrößen für die Fehlercodes bestimmt werden, die für die Nutzfahrzeuganhänger dieser Gruppen von Nutzfahrzeuganhängern der Vielzahl von Nutzfahrzeuganhängern empfangen wurden.

Dieses Bestimmen von Kenngrößen für unterschiedliche Gruppen von Nutzfahrzeuganhängern der Vielzahl von Nutzfahrzeuganhängern ermöglicht es beispielsweise im Rahmen des Auswertens auffällige Abweichungen (z.B. Abweichungen, die einen vorgegebenen Schwellwert wie z.B. 10% unter- oder überschreiten) zwischen Kenngrößen, die für unterschiedliche Gruppen von Nutzfahrzeuganhängern der Vielzahl von Nutzfahrzeuganhängern bestimmt werden, zu erkennen.

Wie oben offenbart, kann eine Gruppe von Nutzfahrzeuganhägern der Vielzahl von Nutzfahrzeuganhängern beispielsweise alle Nutzfahrzeuganhänger der Vielzahl von Nutzfahrzeuganhängern umfassen, die sich im gleichen Grundzustand befinden und/oder die gleiche Konfiguration aufweisen und/oder dem gleichen Eigentümer gehören und/oder im gleichen Zeitraum (z.B. Produktionstag, Produktionsmonat oder Produktionsjahr) produziert wurden. Dementsprechend kann die Vielzahl von Nutzfahrzeuganhängern mehrere Gruppen von Nutzfahrzeuganhängern umfassen; und ein Nutzfahrzeuganhänger der Vielzahl von Nutzfahrzeuganhängern kann zu mehreren Gruppen von Nutzfahrzeuganhängern gehören. Es versteht sich, dass die Erfindung nicht auf die oben genannten Gruppen von Nutzfahrzeuganhängern beschränkt ist.

Zum Beispiel kann jeder Nutzfahrzeuganhänger der Vielzahl von Nutzfahrzeuganhängern einer oder mehreren Gruppen von Nutzfahrzeugen zugeordnet sein. Die Gruppenzuordnungen der Vielzahl von Nutzfahrzeuganhängern zu den Gruppen von Nutzfahrzeuganhängern kann beispielsweise in einer Datenbank (z.B. einer Datenbank eines ERP-Systems (Enterprise Ressource Planning Systems)) hinterlegt sein, so dass das Auswerten das Abfragen der Gruppenzuordnungen in der Datenbank umfassen kann.

In beispielhaften Ausgestaltungen wird als Ergebnis des Auswertens erhalten:
- die statistischen Kenngrößen; und/oder
- eine Angabe, ob eine statistische Auffälligkeit erkannt wurde.

Zum Beispiel kann als Ergebnis des Auswertens die statistischen Kenngrößen für mehrere Gruppen von Nutzfahrzeuganhängern (z.B. für jede Gruppe von Nutzfahrzeuganhängern) erhalten werden.

Alternativ oder zusätzlich kann die Angabe, dass eine statistische Auffälligkeit erkannt wurde, auch noch angeben, für welche Gruppe von Nutzfahrzeuganhängern die statistische Auffälligkeit erkannt wurde.

In beispielhaften Ausgestaltungen repräsentiert und/oder umfasst die Benutzerinformation eine Handlungsempfehlung für ein oder mehrere (z.B. eine Gruppe von Nutzfahrzeuganhängern) der Vielzahl von Nutzfahrzeuganhängern. Zum Beispiel kann die Handlungsempfehlung vorgeben, welche Gegenmaßnahmen im Hinblick auf einen Fehlercode, für den eine statistische Auffälligkeit erkannt wurde, und/oder eine Gruppe von Nutzfahrzeuganhängern, für die eine statistische Auffälligkeit erkannt wurde, getroffen werden sollen, z.B. ob und wann eine Gruppe von Nutzfahrzeuganhängern in die Werkstatt gerufen werden soll.

In beispielhaften Ausgestaltungen repräsentiert und/oder umfasst die Benutzerinformation einen Diagnoseablauf mit mehreren Diagnoseschritten in einer vorgegebenen Reihenfolge.

Die Benutzerinformation kann zumindest einen einem Fehlercode (z.B. einem Fehlercode, für den eine statistische Auffälligkeit erkannt wurde) zugeordneten Diagnoseablauf umfassen. Zum Beispiel kann jedem Fehlercode zumindest ein solcher Diagnoseablauf zugeordnet sein. Es kann auch vorgesehen sein, dass mehrere solcher Diagnoseabläufe einem Fehlercode zugeordnet sind. Die Zuordnung der Fehlercodes zu den Diagnoseabläufen kann beispielsweise ein einer Datenbank (z.B. einer Fehlercode-und/oder Diagnose-Datenbank eines Fahrzeugherstellers und/oder eines Betreibers einer Fahrzeugflotte) hinterlegt sein, so dass das Erzeugen der Benutzerinformation das Abfragen der dem Fehlercode (z.B. dem Fehlercode für den eine statistische Auffälligkeit erkannt wurde) zugeordneten Diagnoseabläufe in der Datenbank umfassen kann.

In beispielhaften Ausführungsformen umfasst das Verfahren ferner zumindest einen der folgenden Schritte:
- Ausgeben oder Bewirken des Ausgebens der Benutzerinformation an einen Benutzer (z.B. einen mit dem Fahrzeug assoziierten Benutzer);
- Bereitstellen der Benutzerinformation zum Ausgeben an einen Benutzer (z.B. einen mit dem Fahrzeug assoziierten Benutzer).

Wie oben offenbart, dient die Benutzerinformation beispielsweise dazu, zumindest einen Benutzer über das Ergebnis des Auswertens zu informieren. Unter dem Ausgeben einer solchen Benutzerinformation soll beispielsweise verstanden werden, dass sie durch Ausgabemittel wie einen Bildschirm und/oder einen Lautsprecher ausgegeben wird. Zum Beispiel kann die Benutzerinformation als Text und/oder Grafik auf einem Bildschirm angezeigt und/oder als Sprachinformation durch einen Lautsprecher wiedergegeben werden.

Zum Beispiel kann zumindest einer der Server die Benutzerinformation ausgeben. Alternativ oder zusätzlich kann die Benutzerinformation auch durch eine andere Vorrichtung (z.B. eine von den Servern verschiedene Vorrichtung) wie eine Benutzervorrichtung ausgegeben werden. Zu diesem Zweck kann das Bewirken des Ausgebens der Benutzerinformation das Senden der Benutzerinformation an die andere Vorrichtung umfassen; und/oder das Bereitstellen der Benutzerinformation zum Ausgeben der Benutzerinformation kann derart erfolgen, dass die andere Vorrichtung die Benutzerinformation abrufen kann. Das Senden und/oder Abrufen der Benutzerinformation kann über einen Kommunikationspfad erfolgen. Der Kommunikationspfad zum Senden und/oder Abrufen der Benutzerinformation kann beispielsweise (i) drahtgebunden sein oder (iii) zumindest einen drahtgebundenen Abschnitt umfassen, z.B. wenn der zumindest eine Server drahtgebunden kommuniziert. Es versteht sich, dass der Kommunikationspfad auch zumindest einen drahtlosen Abschnitt umfassen kann, z.B. wenn die andere Vorrichtung drahtlos kommuniziert.

### Detaillierte Beschreibung einiger beispielhafter Ausführungsformen

Es zeigen:
- Fig. 1: eine schematische Darstellung einer beispielhaften Ausführungsform eines Systems gemäß der Erfindung;
- Fig. 2: eine schematische Darstellung einer beispielhaften Ausführungsform eines Servers gemäß der Erfindung;
- Fig. 3: eine schematische Darstellung einer beispielhaften Ausführungsform einer Datenverarbeitungseinheit für ein Fahrzeug gemäß der Erfindung;
- Fig. 4: ein Flussdiagramm einer beispielhaften Ausführungsform eines Verfahrens gemäß der Erfindung.

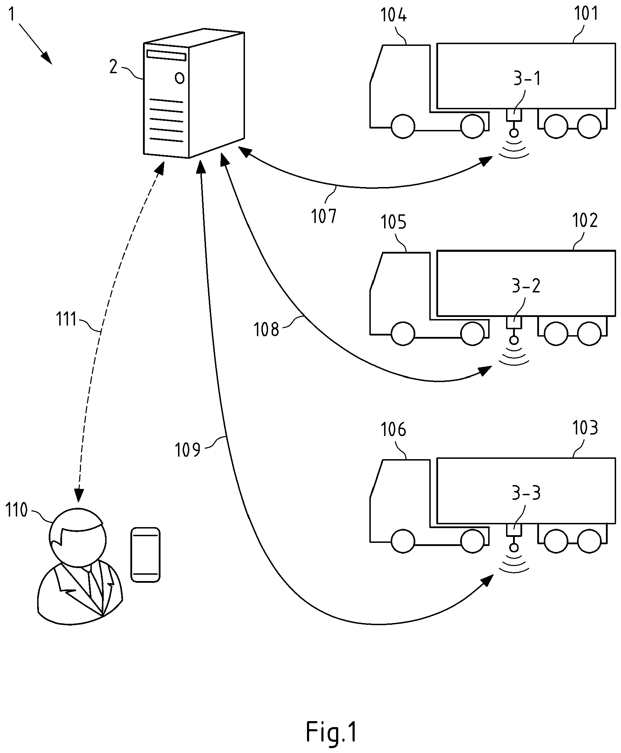

Fig. 1 zeigt eine schematische Darstellung einer beispielhaften Ausführungsform eines Systems gemäß der Erfindung.

Das System 1 umfasst unter anderem Nutzfahrzeuganhänger 101 bis 103. Die Nutzfahrzeuganhänger 101 bis 103 sind in Fig. 1 beispielhaft als Sattelauflieger dargestellt, die von einem der jeweiligen Zugfahrzeuge 104 bis 106 gezogen werden. Im Folgenden wird beispielhaft davon ausgegangen, dass die Sattelauflieger 101 bis 103 Teil einer Vielzahl von Sattelaufliegern mit weiteren nicht dargestellten Sattelaufliegern sind und dass die Sattelauflieger 101 bis 103 eine Gruppe von Sattelaufliegern der Vielzahl von Sattelaufliegern bilden, z.B. weil sie zum gleichen Fuhrpark gehören, die gleiche Konfiguration aufweisen und im gleichen Produktionszeitraum produziert wurden.

Ferner umfasst das System 1 einen von den Sattelaufliegern 101 bis 103 und den Zugfahrzeugen 104 bis 106 entfernten Server 2. Es versteht sich, dass das System auch mehrere Server 2 und/oder eine Cloud umfassen könnte. Im Folgenden wird jedoch beispielhaft davon ausgegangen, dass das System nur den Server 2 umfasst.

In Fig. 1 sind jeweilige Kommunikationspfade 107 bis 109 zwischen den Sattelaufliegern 101 bis 103 und dem Server 2 dargestellt. Über den Kommunikationspfad 107 können der Sattelaufliegers 101 und der Server 2 Informationen (z.B. Telematikdatensätze und/oder Softwareupdates) austauschen (z.B. senden und empfangen). In gleicher Weise können die Sattelauflieger 102 und 103 und der Server 2 über den jeweiligen der Kommunikationspfade 108 und 109 (z.B. Telematikdatensätze und/oder Softwareupdates) austauschen (z.B. senden und empfangen). Zum Beispiel umfasst jeder der Sattelauflieger 101 bis 103 eine jeweilige Telematikeinheit 3 (vgl. 3-1, 3-2 und 3-3), die eingerichtet ist, um mit dem Server 2 über den jeweiligen Kommunikationspfad Informationen auszutauschen.

Im Folgenden wird beispielhaft davon ausgegangen, dass jeder der Kommunikationspfade 107 bis 109 eine jeweilige drahtlose Verbindung wie eine WLAN- und/oder Mobilfunk-Verbindung umfasst. WLAN ist zum Beispiel in den Standards der IEEE-802.11-Familie spezifiziert und derzeit im Internet unter www.ieee.org erhältlich. Unter Mobilfunk sollen insbesondere Mobilfunkkommunikationssysteme wie ein 2G/3G/4G/5G/6G-Kommunikationssystem verstanden werden. Die Spezifikationen der 2G, 3G, 4G, 5G oder 6G Mobilfunkkommunikationssysteme werden derzeit durch das 3rd Generation Partnership Project (3GPP) entwickelt und können derzeit im Internet unter https://www.3gpp.org/ abgerufen werden.

Es versteht sich, dass jeder der Kommunikationspfade 107 bis 109 neben der drahtlosen Verbindung auch eine drahtgebundene Verbindung über ein drahtgebundenes Kommunikationsnetzwerk wie ein Ethernet-Netzwerk und/oder das Internet umfassen kann. Ethernet ist zum Beispiel in den Standards der IEEE-802.3-Familie spezifiziert und derzeit im Internet unter www.ieee.org erhältlich.

Der Informationsaustausch über die Kommunikationspfade 107 bis 109 kann verschlüsselt erfolgen.

Zusätzlich ist in Fig. 1 eine Benutzervorrichtung 110 eines Benutzers wie eines Fuhrparkbetreuers optional dargestellt. Zum Beispiel gehören die Sattelauflieger 101, 102 und 103 zu einem von dem Benutzer 110 betreuten Fuhrpark. Der Server 2 kann mit der Benutzervorrichtung 110 des Benutzers über den optionalen Kommunikationspfad 111 kommunizieren.

Die Telematikeinheiten 3-1, 3-2 und 3-3 der Sattelauflieger 101 bis 103 senden mit einer bestimmten Häufigkeit (z.B. mit einer bestimmten Frequenz und/oder in bestimmten Zeitabständen) Telematikdatensätze über die Kommunikationspfade 107 bis 109 an den Server 2. Der Server 2 kann über die Kommunikationspfade 107 bis 109 beispielsweise Softwareupdates an die Telematikeinheiten 3-1, 3-2 und 3-3 der Sattelauflieger 101 bis 103 senden. Ferner kann der Server 2 über den Kommunikationspfad 111 eine Bernutzerinformation an die Benutzervorrichtung 111 senden.

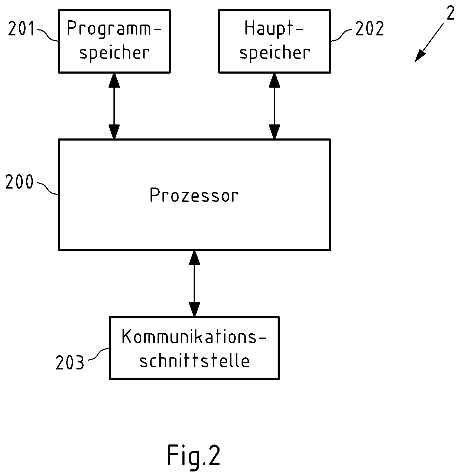

Fig. 2 zeigt eine schematische Darstellung einer Ausführungsform eines Servers 2 gemäß der Erfindung. Im Folgenden wird beispielhaft davon ausgegangen, dass der Server 2 des in Fig. 1 dargestellten Systems 1 diesem in Fig. 2 dargestellten Server 2 entspricht.

Der Server 2 umfasst einen Prozessor 200 und verbunden mit dem Prozessor 200 einen ersten Speicher als Programmspeicher 201, einen zweiten Speicher als Hauptspeicher 202 und eine Netzwerkschnittstelle 203.

Unter einem Prozessor soll beispielsweise ein Mikroprozessor (Engl. Central Processing Unit, CPU), eine Mikrokontrolleinheit, ein Mikrocontroller, ein digitaler Signalprozessor (DSP), eine Anwendungsspezifische Integrierte Schaltung (ASIC), ein Field Programmable Gate Array (FPGA), oder ein graphischer Prozessor (Engl: Graphics Processing Unit, GPU) verstanden werden. Es versteht sich, dass die Servervorrichtung 2 auch mehrere Prozessoren 200 umfassen kann.

Prozessor 200 führt Anweisungen aus, die in Programmspeicher 201 gespeichert sind, und speichert beispielsweise Zwischenergebnisse oder Ähnliches in Hauptspeicher 202. Die Verwendung eines (zusätzlichen) graphischen Prozessors kann beispielsweise zur Ausführung von Algorithmen zum maschinellen Lernen und/oder künstlichen neuronalen Netzwerken vorteilhaft sein.

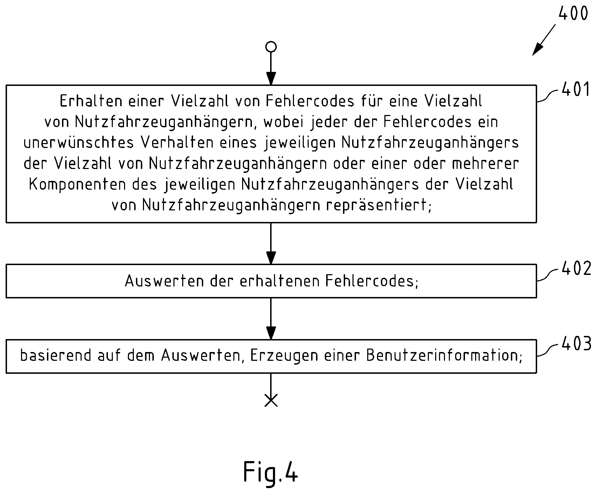

In Programmspeicher 201 sind beispielsweise Anweisungen gespeichert, die den Prozessor 200, wenn er die Programmanweisungen ausführt, veranlassen, das Verfahren gemäß der Erfindung (z.B. das Verfahren gemäß dem in Fig. 4 dargestellten Flussdiagramm 4) zumindest teilweise auszuführen. Im Folgenden wird ferner davon ausgegangen, dass in dem Programmspeicher 201 ein Erkennungsmodell in Form eines künstlichen neuronalen Netzwerks gespeichert ist, das durch maschinelles Lernen trainiert wird und genutzt werden kann, um ein unbekanntes unerwünschtes Verhalten eines Sattelaufliegers und/oder einer oder mehrerer Komponenten des Sattelaufliegers zu erkennen.

Außerdem kann Programmspeicher 201 für jeden der Sattelauflieger 101, 102 und 103 des in Fig. 1 dargestellten Systems 1 jeweils eine digitale Repräsentation enthalten.

Programmspeicher 201 enthält ferner beispielsweise das Betriebssystem des Servers 2, das beim Starten des Servers 3 zumindest teilweise in Hauptspeicher 202 geladen und vom Prozessor 200 ausgeführt wird. Insbesondere wird beim Starten des Servers 2 zumindest ein Teil des Kerns des Betriebssystems in den Hauptspeicher 202 geladen und von Prozessor 200 ausgeführt.

Ein Beispiel für ein Betriebssystem ist ein Windows -, UNIX-, Linux-, Android-, Apple iOS- und/oder MAC OS-Betriebssystem. Das Betriebssystem ermöglicht insbesondere die Verwendung des Servers 2 zur Datenverarbeitung. Es verwaltet beispielsweise Betriebsmittel wie einen Hauptspeicher und einen Programmspeicher, stellt unter anderem durch Programmierschnittstellen anderen Computerprogrammen grundlegende Funktionen zur Verfügung und steuert die Ausführung von Computerprogrammen.

Ein Programmspeicher ist beispielsweise ein nicht-flüchtiger Speicher wie ein Flash-Speicher, ein Magnetspeicher, ein EEPROM-Speicher (elektrisch löschbarer programmierbarer Nur-Lese-Speicher) und/oder ein optischer Speicher. Ein Hauptspeicher ist zum Beispiel ein flüchtiger oder nicht-flüchtiger Speicher, insbesondere ein Speicher mit wahlfreiem-Zugriff (RAM) wie ein statischer RAM-Speicher (SRAM), ein dynamischer RAM-Speicher (DRAM), ein ferroelektrischer RAM-Speicher (FeRAM) und/oder ein magnetischer RAM-Speicher (MRAM).

Hauptspeicher 202 und Programmspeicher 201 können auch als ein Speicher ausgebildet sein. Alternativ können Hauptspeicher 202 und/oder Programmspeicher 201 jeweils durch mehrere Speicher gebildet werden. Ferner können Hauptspeicher 202 und/oder Programmspeicher 201 auch Teil des Prozessors 200 sein.

Prozessor 200 steuert die Kommunikationsschnittstelle 203, welche beispielsweise eingerichtet ist über eine Verbindung in einem Kommunikationsnetzwerk Informationen mit einer entfernten Vorrichtung auszutauschen (z.B. zu senden und/oder zu empfangen). Im Folgenden wird beispielhaft davon ausgegangen, dass die Kommunikationsschnittstelle 203 eine drahtgebundene Kommunikationsschnittstelle ist. Ein Beispiel für eine drahtgebundene Kommunikationsschnittstelle ist eine Ethernet-Schnittstelle. Wie oben offenbart, ist Ethernet zum Beispiel in den Standards der IEEE-802.3-Familie spezifiziert. Zum Beispiel kann der Server 2 die Kommunikationsschnittstelle 203 verwenden, um Informationen (z.B. Telematikdatensätze und/oder Softwareupdates und/oder Benutzerinformationen) über die Kommunikationspfade 107 bis 109 und 111 mit den Sattelaufliegern 101 bis 103 und der Benutzervorrichtung 110 des in Fig. 1 dargestellten Systems 1 auszutauschen (z.B. zu senden und/oder zu empfangen).

Die Komponenten 200 bis 203 des Servers 2 sind beispielsweise über einen oder mehrere Bussysteme (z.B. ein oder mehrere serielle und/oder parallele Busverbindungen) kommunikativ und/oder operativ miteinander verbunden.

Es versteht sich, dass der Server 2 neben den Komponenten 200 bis 203 weitere Komponenten (z.B. eine Benutzerschnittstelle) umfassen kann.

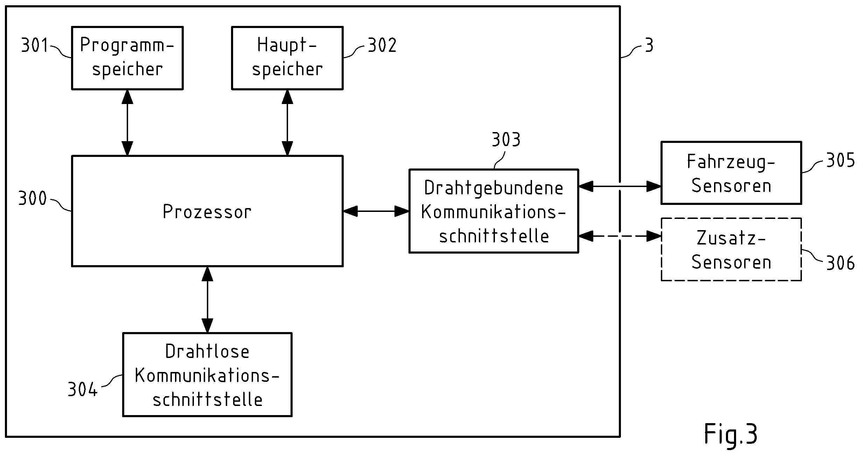

Fig. 3 zeigt eine schematische Darstellung einer beispielhaften Ausführungsform einer Datenverarbeitungseinheit 3 für einen Nutzfahrzeuganhänger gemäß der Erfindung. Im Folgenden wird beispielhaft davon ausgegangen, dass die Datenverarbeitungseinheit 3 eine Telematikeinheit ist und die Telematikeinheiten 3-1, 3-2 und 3-3 der Sattelauflieger 101, 102 und 103 des in Fig. 1 dargestellten Systems 1 dieser in Fig. 3 dargestellten Telematikeinheit 3 entsprechen.

Die Telematikeinheit 3 umfasst einen Prozessor 300 und verbunden mit dem Prozessor 300 einen ersten Speicher als Programmspeicher 301, einen zweiten Speicher als Hauptspeicher 302 und eine drahtgebundene Kommunikationsschnittstelle 303 sowie eine drahtlose Kommunikationsschnittstelle 304.

Der Prozessor 300 führt Anweisungen aus, die in Programmspeicher 301 gespeichert sind, und speichert beispielsweise Zwischenergebnisse oder Ähnliches in Hauptspeicher 302. Es versteht sich, dass die Telematikeinheit 3 auch mehrere Prozessoren 100 umfassen kann.

In dem Programmspeicher 301 ist beispielsweise das Betriebssystem der Telematikeinheit 3 gespeichert, das beim Starten der Telematikeinheit 3 zumindest teilweise in Hauptspeicher 302 geladen und vom Prozessor 300 ausgeführt wird. Insbesondere wird beim Starten der Telematikeinheit 3 zumindest ein Teil des Kerns des Betriebssystems in den Hauptspeicher 302 geladen und vom Prozessor 300 ausgeführt.

Wie oben im Detail offenbart ist, ein Beispiel für ein Betriebssystem ist ein Windows -, UNIX-, Linux-, Android-, Apple iOS- und/oder MAC OS-Betriebssystem. Das Betriebssystem ermöglicht insbesondere die Verwendung der Telematikeinheit 3 zur Datenverarbeitung.

Neben dem Betriebssystem der Telematikeinheit 3 kann der Programmspeicher 301 auch weitere Anweisungen enthalten. Beispiele für ein solche Anweisungen sind beispielsweise Anweisungen eines Computerprogramms wie eines Telematikprogramms und/oder eines Diagnoseprogramms.

Die Anweisungen des Diagnoseprogramms, veranlassen den Prozessor 300, wenn er die Anweisungen ausführt, beispielsweise ein unerwünschtes Verhalten basierend auf über die drahtgebundene Kommunikationsschnittstelle 303 empfangenen Sensordaten zu erkennen. Die empfangenen Sensordaten bilden beispielsweise einen ersten Sensordatensatz. Zum Beispiel kann das Erkennen eines unerwünschten Verhaltens (z.B. eines unerwünschten Betriebszustands) das Bestimmen der Ähnlichkeit und/oder das Vergleichen des jeweiligen ersten Sensordatensatzes mit einem oder mehreren vorgegebenen Sensordatensätze umfassen. Zum Beispiel ist jeder der vorgegebenen Sensordatensätze mit einem bestimmten unerwünschten Verhalten assoziiert. Zum Beispiel können solche Sensordatensätze für bekannte unerwünschte Verhalten vorgegeben werden, z.B. weil sie in der Vergangenheit zusammen mit dem unerwünschten Verhalten aufgetreten sind. Dementsprechend können die Anweisungen des Diagnoseprogramms, wenn sie durch den Prozessor 300 ausgeführt werden, den Prozessor 300 veranlassen, ein unerwünschtes Verhalten zu erkennen und einen dem erkannten unerwünschten Verhalten zugeordneten Fehlercode auszugeben, wenn das Bestimmen der Ähnlichkeit und/oder das Vergleichen ergibt, dass der erste Sensordatensatz ähnlich (z.B. weil ein als Ergebnis des Bestimmens der Ähnlichkeit und/oder des Vergleichens erhaltenes Ähnlichkeitsmaß einen Schwellwert überschreitet) und/oder identisch zu einem bestimmten Sensordatensatz der vorgegebenen Sensordatensätze ist.

Die Anweisungen des Telematikprogramms, veranlassen den Prozessor 300, wenn er die Anweisungen ausführt, beispielsweise über die drahtgebundene Kommunikationsschnittstelle 303 empfangene Sensordaten (z.B. im Programmspeicher 301 und/oder Hauptspeicher 302) sowie vom Diagnoseprogramm ausgegebene Fehlercodes zwischenzuspeichern und mit einer bestimmten Häufigkeit (z.B. mit einer bestimmten Frequenz und/oder in bestimmten Zeitabständen) einen Telematikdatensatz, der die Sensordaten und Fehlercodes enthält, die zwischengespeichert wurden, nachdem der vorherige Telematikdatensatz gesendet wurde, über die drahtlose Kommunikationsschnittstelle 304 an den Server 2 zu senden. Neben den Sensordaten und den Fehlercodes kann der jeweilige Telematikdatensatz auch weitere Informationen (z.B. Zustandsinformationen) enthalten.

Es versteht sich, dass das Telematikprogramm und das Diagnoseprogramm auch Funktionen eines gemeinsamen Computerprogramms sein können. Alternativ können die Funktionen des Telematikprogramms und des Diagnoseprogramms auf mehrere Computerprogramme verteilt sein.

Der Hauptspeicher 302 und der Programmspeicher 301 können auch als ein Speicher ausgebildet sein. Alternativ können der Hauptspeicher 302 und/oder der Programmspeicher 301 jeweils durch mehrere Speicher gebildet werden. Ferner können der Hauptspeicher 302 und/oder der Programmspeicher 301 auch Teil des Prozessors 100 sein.

Der Prozessor 300 steuert die drahtgebundene Kommunikationsschnittstelle 303, welche beispielsweise eingerichtet ist, Informationen mit anderen Komponenten des jeweiligen Sattelaufliegers auszutauschen (z.B. zu senden und/oder zu empfangen). Die Kommunikationsschnittstelle 303 ist beispielsweise als Ethernet-, CAN-, K-Leitungs-, LIN- oder Flexray-Schnittstelle ausgebildet. Sie ist beispielsweise eingerichtet zur drahtgebundenen Kommunikation mit einem oder mehreren Fahrzeugsensoren 305 des jeweiligen Sattelaufliegers über ein Ethernet-Netzwerk oder ein CAN-, K-Leitungs-, LIN- oder Flexray-Bussystem des jeweiligen Sattelaufliegers. Zum Beispiel kann die Telematikeinheit 3 durch die drahtgebundene Kommunikationsschnittstelle 303 Informationen an die Fahrzeugsensoren 305 senden und/oder von diesen empfangen. Wie oben offenbart, ist Ethernet zum Beispiel in den Standards der IEEE-802.3-Familie spezifiziert. CAN ist in den Standards der ISO 11898-Familie, K-Leitung ist in den Standards ISO 9141 und ISO 14230-1, LIN ist in den Standards der ISO 17987-Familie und FlexRay in den Standards der ISO 17458-Familie spezifiziert.

In Fig. 3 sind die die Fahrzeugsensoren 305 nicht als Teil der Telematikeinheit 3 dargestellt. Es versteht sich jedoch, dass die die Fahrzeugsensoren 305 auch vollständig oder teilweise Teil der Telematikeinheit sein kann/können. Ferner sind in Fig. 3 optionale Zusatzsensoren dargestellt.

Beispiele für die Fahrzeugsensoren 305 sind ein Temperatursensor und/oder ein Batteriesensor und/oder ein Spannungssensor und/oder ein Stromsensor und/oder ein Türsensor und/oder ein Tankfüllstandssensor und/oder ein Reifendrucksensor und/oder ein Gewichtssensor. Es versteht sich, dass die Fahrzeugsensoren 305 nicht auf diese Sensortypen beschränkt sind.

Die Fahrzeugsensoren 305 können zumindest teilweise Teil des jeweiligen Sattelaufliegers sein.

Ferner weist die Telematikeinheit 3 eine durch den Prozessor 300 gesteuerte drahtlose Kommunikationsschnittstelle 304 auf, über welche Informationen über einen drahtlosen Kommunikationspfad mit einer entfernten Vorrichtung wie dem Server 2 in dem in Fig. 1 dargestellten System ausgetauscht (z.B. gesendet und/oder empfangen) werden können. Die drahtlose Kommunikationsschnittstelle 304 ist beispielsweise als WLAN- und/oder Mobilfunk-Schnittstelle ausgebildet. WLAN ist, wie oben offenbart, in den Standards der IEEE 802.1 1 -Familie standardisiert. Unter Mobilfunk sollen insbesondere Mobilfunkkommunikationssysteme wie ein 2G/3G/4G/5G/6G-Kommunikationssystem verstanden werden. Die Spezifikationen der 2G, 3G, 4G, 5G oder 6G Mobilfunkkommunikationssysteme werden derzeit durch das 3rd Generation Partnership Project (3GPP) entwickelt und können derzeit im Internet unter https://www.3gpp.org/ abgerufen werden.

Die Komponenten 300 bis 304 der Telematikeinheit 3 sind beispielsweise über einen oder mehrere Bussysteme (z.B. ein oder mehrere serielle und/oder parallele Busverbindungen) kommunikativ und/oder operativ miteinander verbunden.

Es versteht sich, dass die Telematikeinheit 3 neben den dargestellten Komponenten weitere Komponenten (z.B. eine Benutzerschnittstelle) umfassen kann.

Fig. 4 zeigt ein Flussdiagramm 400 einer beispielhaften Ausführungsform eines Verfahrens gemäß der Erfindung. Im Folgenden wird beispielhaft davon ausgegangen, dass das Verfahren durch den Server 2, der Teil des in Fig. 1 dargestellten Systems 1 ist, ausgeführt wird.

In einem Schritt 401 wird eine Vielzahl von Fehlercodes für eine Vielzahl von Nutzfahrzeuganhängern erhalten, wobei jeder der Fehlercodes ein unerwünschtes Verhalten eines jeweiligen Nutzfahrzeuganhängers der Vielzahl von Nutzfahrzeuganhängern oder einer oder mehrerer Komponenten des jeweiligen Nutzfahrzeuganhängers der Vielzahl von Nutzfahrzeuganhängern repräsentiert.

Zum Beispiel empfängt der Server 2 in Schritt 401 über den Kommunikationspfad 107 von der Telematikeinheit 3-1 des Sattelaufliegers 101 einen ersten Telematikdatensatz mit einem Fehlercode und über den Kommunikationspfad 108 von der Telematikeinheit 3-2 des Sattelaufliegers 102 einen zweiten Telematikdatensatz mit einem Fehlercode.

Zum Beispiel hat der Prozessor 300 der Telematikdateneinheit 3-1 des Sattelauflieger 101 durch Fahrzeugsensoren 305 des Sattelaufliegers 101 erfasste Sensordaten über die drahtgebundene Kommunikationsschnittstelle 303 empfangen und basierend auf den empfangenen Sensordaten ein unerwünschtes Verhalten des Sattelaufliegers 101 und/oder einer oder mehrerer Komponenten des Sattelaufliegers 101 erkannt und einen dem erkannten unerwünschten Verhalten zugeordneten Fehlercode ausgegeben. Anschließend hat der Prozessor 300 der Telematikdateneinheit 3-1 des Sattelauflieger 101 einen Telematikdatensatz mit den Sensordaten und dem Fehlercode erzeugt und über den Kommunikationspfad 107 an den Server 2 gesendet. Gleichermaßen kann die Telematikdateneinheit 3-2 des Sattelaufliegers 102 ein unerwünschtes Verhalten des Sattelaufliegers 102 und/oder einer oder mehrerer Komponenten des Sattelaufliegers 102 erkannt und in der Folge einen Telematikdatensatz mit Sensordaten und dem Fehlercode erzeugt und über den Kommunikationspfad 108 an den Server 2 gesendet haben.

Zum Beispiel können die Telematikeinheiten 3-1 und 3-2 das gleiche unerwünschte Verhalten erkannt haben, so dass der erste Telematikdatensatz und der zweite Telematikdatensatz beispielsweise den gleichen Fehlercode enthalten. Zum Beispiel kann das durch diesen Fehlercode repräsentierte unerwünschte Verhalten ein Batteriefehler einer jeweiligen Batterie der Sattelauflieger 101 und 102 sein.

Es versteht sich, dass der Server 2 in Schritt 401 neben dem ersten Telematikdatensatz und dem zweiten Telematikdatensatz noch weitere Telematikdatensätze mit Fehlercodes von anderen in Fig. 1 nicht dargestellten Sattelaufligern der Vielzahl von Sattelaufliegern empfangen kann.

In einem Schritt 402 werden die in Schritt 401 erhaltenen Fehlercodes ausgewertet.

Wie oben im Detail offenbart, kann unter dem Auswerten der erhaltenen Fehlercodes in Schritt 402 beispielsweise verstanden werden, dass für die Vielzahl von Fehlcodes vorgegebene Kenngrößen (z.B. Gesamtpopulation und/oder Anzahl und/oder Wachstums- oder Schrumpfrate (z.B. pro Tag oder pro Woche oder pro Monat oder pro Jahr) und/oder durch (z.B. lineare oder Polynom Trend) Interpolation und/oder Trendanalysen erhaltene Prognosewerte) bestimmt werden. Durch das Bestimmen solcher statistischer Kenngrößen können im Rahmen des Auswertens beispielsweise statistische Auffälligkeiten wie auffällige Trends und/oder auffällige Abweichungen erkannt werden. Das Auswerten kann beispielsweise anhand vorgegebener Regeln (z.B. einem Algorithmus) erfolgen. Die Regeln können beispielsweise vorgeben, welche Kenngrößen bestimmt und unter welchen Umständen eine statistische Auffälligkeit wie ein auffälliger Trend und/oder eine auffällige Abweichung erkannt werden sollen.

Zum Beispiel wird das Bestimmen von statistischen Kenngrößen in bestimmten Zeitabständen wiederholt wird, wobei mit jeder Wiederholung jeweils nur die Kenngrößen für die Fehlercodes bestimmt werden, die seit der letzten Wiederholung erhalten wurden. Zum Beispiel umfasst die Vielzahl von Fehlercodes nur die Fehlercodes, die in einem durch einen solchen Zeitabstand definierten Zeitraum erhalten wurden.

Zum Beispiel werden die statistischen Kenngrößen jeweils für unterschiedliche Gruppen von Sattelaufliegern der Vielzahl von Sattelaufliegern bestimmt, wobei für jede der Gruppen von Sattelaufliegern der Vielzahl von Sattelaufliegern jeweils nur die Kenngrößen für die Fehlercodes bestimmt werden, die für die Sattelauflieger dieser Gruppen von Sattelaufliegern der Vielzahl von Sattelaufliegern empfangen wurden.

Dieses Bestimmen von Kenngrößen für unterschiedliche Gruppen von Sattelaufliegern der Vielzahl von Sattelaufliegern ermöglicht es beispielsweise im Rahmen des Auswertens auffällige Abweichungen (z.B. Abweichungen, die einen vorgegebenen Schwellwert wie z.B. 10% unter- oder überschreiten) zwischen Kenngrößen, die für unterschiedliche Gruppen von Sattelaufliegern der Vielzahl von Sattelaufliegern bestimmt werden, zu erkennen.

Zum Beispiel kann in Schritt 402 der Fehlerquotient als Kenngröße für den Fehlercode bestimmt werden, der in dem ersten Telematikdatensatz und dem zweiten Telematikdatensatz enthalten ist. Zum Beispiel kann der Fehlerquotient für die Vielzahl von Sattelaufliegern und für die durch die Sattelauflieger 101 bis 103 gebildete Gruppe von Sattelaufliegern bestimmt werden. Der basierend auf die Fehlercode bestimmte Fehlerquotient für die Vielzahl von Sattelaufliegern beträgt beispielsweise 2/100 = 2%, wohingegen der basierend auf diesem Fehlercode bestimmte Fehlerquotient für die durch die Sattelauflieger 101 bis 103 gebildete Gruppe von Sattelaufliegern 2/3 ≈ 66,67 % beträgt. Aufgrund dieser beträchtlichen Abweichung wird im Rahmen des Auswertens in Schritt 402 beispielsweise eine statistische Auffälligkeit für diesen Fehlercode und die durch die Sattelauflieger 101 bis 103 gebildete Gruppe von Sattelaufliegern erkannt. Wie oben offenbart, kann das durch diesen Fehlercode repräsentierte unerwünschte Verhalten ein Batteriefehler einer Batterie des jeweiligen Sattelaufliegers sein. Für die Sattelauflieger 101 und 102 ist dieser Batteriefehler bereits aufgetreten, so dass im Vergleich zur Vielzahl von Sattelaufliegern eine erhöhte Wahrscheinlichkeit dafür besteht, dass dieser Batteriefehler auch beim Sattelauflieger 103 auftreten wird.

Als Ergebnis des Auswertens in Schritt 402 wird beispielsweise die Angabe erhalten, dass eine statistische Auffälligkeit für den Fehlercode, der in dem ersten Telematikdatensatz und dem zweiten Telematikdatensatz enthalten ist, und für die durch die Sattelauflieger 101 bis 103 gebildete Gruppe von Sattelaufliegern erkannt.

In einem Schritt 403, wird eine Benutzerinformation basierend auf dem Auswerten erzeugt.

Unter dem Erzeugen der Benutzerinformation basierend auf dem Auswerten in schritt 403 soll, wie oben offenbart, beispielsweise verstanden werden, dass die Benutzerinformation unter Berücksichtigung zumindest eines Ergebnisses des Auswertens erzeugt wird und/oder dass die Information nur in Reaktion auf zumindest ein vorgegebenes Ergebnis des Auswertens erzeugt wird. Zum Beispiel kann vorgesehen sein, dass die Benutzerinformation nur dann erzeugt wird, wenn im Rahmen des Auswertens eine statistische Auffälligkeit wie auffällige Trends und/oder auffällige Abweichungen erkannt wurden.

In Schritt 403 wird beispielsweise eine Benutzerinformation erzeugt, die angibt, dass eine statistische Auffälligkeit für den Fehlercode, der in dem ersten Telematikdatensatz und dem zweiten Telematikdatensatz enthalten ist, und für die durch die Sattelauflieger 101 bis 103 gebildete Gruppe von Sattelaufliegern erkannt wurde. Ferner kann die Benutzerinformation beispielsweise als Handlungsempfehlung vorgeben, die betroffenen Sattelauflieger, bei denen der Batteriefehler noch nicht aufgetreten ist, umgehend in die Werkstatt zu rufen.

Die in schritt 403 erzeugte Benutzerinformation kann der Server 2 über den Kommunikationspfad 111 an die Benutzervorrichtung 110 senden. Die Benutzervorrichtung 110 kann die Benutzerinformation dann an den Benutzer, der den Fuhrpark mit den Sattelaufliegern 101, 102 und 103 betreut, ausgeben.

Die in dieser Spezifikation beschriebenen beispielhaften Ausführungsformen der vorliegenden Erfindung sollen auch in allen Kombinationen miteinander offenbart verstanden werden. Insbesondere soll auch die Beschreibung eines von einer Ausführungsform umfassten Merkmals - sofern nicht explizit gegenteilig erklärt - vorliegend nicht so verstanden werden, dass das Merkmal für die Funktion des Ausführungsbeispiels unerlässlich oder wesentlich ist. Die Abfolge der in dieser Spezifikation geschilderten Schritte in den einzelnen Flussdiagrammen ist nicht zwingend, alternative Abfolgen der Schritte sind denkbar - soweit nicht anders angegeben. Die Schritte können auf verschiedene Art und Weise implementiert werden, so ist eine Implementierung in Software (durch Programmanweisungen), Hardware oder eine Kombination von beidem zur Implementierung der Schritte denkbar.

In den Patentansprüchen verwendete Begriffe wie "umfassen", "aufweisen", "beinhalten", "enthalten" und dergleichen schließen weitere Elemente oder Schritte nicht aus. Unter die Formulierung "zumindest teilweise" fallen sowohl der Fall "teilweise" als auch der Fall "vollständig". Die Formulierung "und/oder" soll dahingehend verstanden werden, dass sowohl die Alternative als auch die Kombination offenbart sein soll, also "A und/oder B" bedeutet "(A) oder (B) oder (A und B)". Eine Mehrzahl von Einheiten, Personen oder dergleichen bedeutet im Zusammenhang dieser Spezifikation mehrere Einheiten, Personen oder dergleichen. Die Verwendung des unbestimmten Artikels schließt eine Mehrzahl nicht aus. Eine einzelne Komponente kann die Funktionen mehrerer in den Patentansprüchen genannten Einheiten bzw. Einrichtungen ausführen. In den Patentansprüchen angegebene Bezugszeichen sind nicht als Beschränkungen der eingesetzten Mittel und Schritte anzusehen.

## Patentansprüche

1. Verfahren ausgeführt durch einen oder mehrere Server (2), wobei das Verfahren umfasst:
- Erhalten (401) einer Vielzahl von Fehlercodes für eine Vielzahl von Nutzfahrzeuganhängern (101-103), wobei jeder der Fehlercodes ein unerwünschtes Verhalten eines jeweiligen Nutzfahrzeuganhängers der Vielzahl von Nutzfahrzeuganhängern (101-103) oder einer oder mehrerer Komponenten des jeweiligen Nutzfahrzeuganhängers der Vielzahl von Nutzfahrzeuganhängern (101-103) repräsentiert;
- Auswerten (402) der erhaltenen Fehlercodes;
- basierend auf dem Auswerten, Erzeugen (403) einer Benutzerinformation.

2. Verfahren nach Anspruch 1, wobei die erhaltenen Fehlercodes zumindest teilweise in Telematikdatensätzen enthalten sind, wobei die Telematikdatensätze von der Vielzahl von Nutzfahrzeuganhängern empfangen werden.

3. Verfahren nach Anspruch 2, wobei jeder in den Telematikdatensätzen enthaltene Fehlercode einen durch eine Datenverarbeitungseinheit (3) des jeweiligen Nutzfahrzeuganhängers der Vielzahl von Nutzfahrzeuganhängern (101-103) erkanntes unerwünschte Verhalten das jeweiligen Nutzfahrzeuganhängers oder einer oder mehrerer Komponenten des jeweiligen Nutzfahrzeuganhängers repräsentiert, wobei die Datenverarbeitungseinheit (3) des jeweiligen Nutzfahrzeuganhängers das unerwünschte Verhalten basierend auf einem jeweiligen ersten Sensordatensatz des jeweiligen Nutzfahrzeuganhängers erkannt hat, wobei der jeweilige erste Sensordatensatz Sensordaten umfasst, die durch Fahrzeugsensoren (305) des jeweiligen Nutzfahrzeuganhängers erfasst wurden.

4. Verfahren nach einem der Ansprüche 1 bis 3, wobei das Verfahren ferner umfasst:
- Bereithalten, für jeden Nutzfahrzeuganhänger der Vielzahl von Nutzfahrzeuganhängern (101-103), einer jeweiligen digitalen Repräsentation des jeweiligen Nutzfahrzeuganhängers;
- Empfangen eines zweiten Sensordatensatzes zumindest für einen Nutzfahrzeuganhänger der Vielzahl von Nutzfahrzeuganhängern (101-103), wobei der zweite Sensordatensatz Sensordaten umfasst, die durch Fahrzeugsensoren (305) des Nutzfahrzeuganhängers erfasst wurden, und wobei der zweite Sensordatensatz einen zweiten Zustand des Nutzfahrzeuganhängers repräsentiert;
- Aktualisieren der digitalen Repräsentation des Nutzfahrzeuganhängers basierend auf dem zweiten Sensordatensatz, um eine aktualisierte digitale Repräsentation des Nutzfahrzeuganhängers in dem zweiten Zustand zu erhalten;
- Erkennen, basierend auf der aktualisierten digitalen Repräsentation des Nutzfahrzeuganhängers, eines unbekannten unerwünschten Verhaltens des Nutzfahrzeuganhängers und/oder einer oder mehrerer Komponenten des Nutzfahrzeuganhängers;
- in Reaktion auf das Erkennen des unbekannten unerwünschten Verhaltens, Zuordnen eines Fehlercodes zu dem erkannten unerwünschten Verhalten.

5. Verfahren nach einem der Ansprüche 3 und 4, wobei der jeweilige erste Sensordatensatz und/oder der zweite Sensordatensatz zumindest Sensordaten eines oder mehrerer Fahrzeugsensoren (305) der folgenden Fahrzeugsensortypen umfasst:
- Temperatursensor;
- Batteriesensor;
- Spannungssensor;
- Stromsensor;
- Türsensor;
- Tankfüllstandssensor;
- Reifendrucksensor;
- Gewichtssensor.

6. Verfahren nach einem der Ansprüche 1 bis 5, wobei das Auswerten (402) ein statistisches Auswerten der erhaltenen Fehlercodesund/oder das das Bestimmen von statistischen Kenngrößen für die Vielzahl von Fehlercodes umfasst.

7. Verfahren nach Anspruch 6, wobei das Bestimmen von statistischen Kenngrößen in bestimmten Zeitabständen wiederholt wird, wobei mit jeder Wiederholung jeweils nur die Kenngrößen für die Fehlercodes bestimmt werden, die seit der letzten Wiederholung erhalten wurden.

8. Verfahren nach einem der Ansprüche 6 und 7, wobei die statistischen Kenngrößen jeweils für unterschiedliche Gruppen von Nutzfahrzeuganhängern der Vielzahl von Nutzfahrzeuganhängern (101-103) bestimmt werden, wobei für jede der Gruppen von Nutzfahrzeuganhängern der Vielzahl von Nutzfahrzeuganhängern (101-103) jeweils nur die Kenngrößen für die Fehlercodes bestimmt werden, die für die Nutzfahrzeuganhänger dieser Gruppen von Nutzfahrzeuganhängern der Vielzahl von Nutzfahrzeuganhängern (101-103) empfangen wurden.

9. Verfahren nach einem der Ansprüche 6 bis 8, wobei als Ergebnis des Auswertens (402) erhalten wird:
- die statistischen Kenngrößen; und/oder
- eine Angabe, ob eine statistische Auffälligkeit erkannt wurde.

10. Verfahren nach einem der Ansprüche 1 bis 9, wobei die Benutzerinformation eine Handlungsempfehlung für ein oder mehrere der Vielzahl von Nutzfahrzeuganhängern (101-103) repräsentiert und/oder umfasst.

11. Verfahren nach einem der Ansprüche 1 bis 10, wobei die Benutzerinformation einen Diagnoseablauf mit mehreren Diagnoseschritten in einer vorgegebenen Reihenfolge repräsentiert und/oder umfasst.

12. Verfahren nach einem der Ansprüche 1 bis 11, wobei das Verfahren ferner zumindest einen der folgenden Schritte umfasst:
- Ausgeben oder Bewirken des Ausgebens der Benutzerinformation an einen Benutzer;
- Bereitstellen der Benutzerinformation zum Ausgeben an einen Benutzer.

13. Computerprogramm umfassend Programmanweisungen, die dazu ausgebildet sind, bei Ausführung durch mindestens einen Prozessor (200) eines Servers (2), den Server (2) zu veranlassen, das Verfahren nach einem der Ansprüche 1 bis 12 auszuführen, wobei der Server (2) veranlasst wird, das Verfahren alleine oder in Kooperation mit einem oder mehreren weiteren Servern auszuführen.

14. Server (2) umfassend Mittel (200-203) eingerichtet zur Ausführung des Verfahrens nach einem der Ansprüche 1 bis 12, wobei die Mittel (200-203) des Servers (2) eingerichtet sind, das Verfahren alleine und/oder in Kooperation mit einem oder mehreren weiteren Servern auszuführen.

15. System (1) umfassend:
- zumindest einen Server (2) nach Anspruch 14; und
- die Vielzahl von Nutzfahrzeuganhängern (101-103).
